**Europäisches Patentamt**

**European Patent Office**

**Office européen des brevets**

(19)

(11) **EP 1 047 236 A1**

(12) **EUROPÄISCHE PATENTANMELDUNG**

(43) Veröffentlichungstag:
**25.10.2000 Patentblatt 2000/43**

(51) Int Cl.$^7$: **H04L 27/26**, H04L 7/04

(21) Anmeldenummer: **99810338.6**

(22) Anmeldetag: **22.04.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder:
• **Dzung, Dacfey, Dr.**
**5430 Wettingen (CH)**

• **Müller, Markus A., Dr.**
**8057 Zürich (CH)**

(74) Vertreter: **ABB Patent Attorneys**
**c/o ABB Business Services Ltd,**
**Intellectual Property (SLE-I),**
**Haselstrasse 16/699**
**5401 Baden (CH)**

(54) **Synchronisation in einem Datenübertragungssystem mittels Fast Fourier Transformation**

(57) In dem erfindungsgemässen Verfahren zur Synchronisation eines Empfängers mit einem empfangenen Datenstrom wird in einem Empfänger innerhalb eines Ausschnittes eines empfangenen Signals eines sogenannten Detektionsfensters, nach einer Synchronisationssequenz der Länge $N_{SYNC}$ gesucht, wobei die Länge das Detektionsfenster vorzugsweise mindestens annähernd $N_{SYNC}$ ist und jeweils sprungweise um $N_{EXT}$ Zeichen verschoben wird.

In einer ersten Variante des erfindungsgemässen Verfahrens wird im Sender eine Synchronisationssequenz zyklisch um $N_{EXT}$ Zeichen erweitert so dass eine vollständige empfangene Synchronisationssequenz in ein Detektionsfenster fällt. In einer zweiten Variante wird die Synchronisationssequenz verdoppelt. Um die erste und zweite Synchronisationssequenz unterscheiden zu können, werden diese markiert, beispielsweise durch Setzen der Phasendifferenz zwischen zwei Frequenzkomponenten der FFT der Synchronisationssequenz. In einer dritten Variante wird die Synchronisationssequenz verdoppelt und die Unterscheidung durch Einbezug der Resultate mehrerer aufeinanderfolgender FFT durchgeführt. In einer vierten Variante wird die Synchronisationssequenz nicht erweitert und die Detektion durch Einbezug der Resultate mehrerer aufeinanderfolgender FFT durchgeführt.

Fig. 4

**Beschreibung**

**Technisches Gebiet**

Die Erfindung bezieht sich auf das Gebiet der Kommunikationstechnik. Sie bezieht sich auf ein Verfahren zur Synchronisation in einem Datenübertragungssystem gemäss dem Oberbegriff des Patentanspruches 1.

**Stand der Technik**

In den meisten Datenübertragungssystemen, in denen die Daten paketweise übermittelt werden, wird zur Synchronisation von einem Sender und einem Empfänger in einem Datenpaket eine bekannte Synchronisationssequenz oder Präambel vor den Benutzerdaten eingefügt. Ebenso wird in Datenübertragungssystemen, in denen die Daten kontinuierlich übermittelt werden, zur Zeichen-, Symbol- oder Bitsynchronisation periodisch eine Synchronisationssequenz in den Strom der Benutzerdaten eingefügt. Bei beiden Arten der Synchronisation korreliert der Empfänger das empfangene Signal y(k) mit einer gespeicherten Synchronisationssequenz $x_{SYNC}(k)$. Das empfangene Signal y(k) ist eine Zeichenfolge, wobei ein Zeichen aufgrund von einem oder mehreren Werten oder Samples eines Analog-Digitalwandlers gebildet wird. Die Korrelation kann auch als Filterung dargestellt werden, wobei y(k) mit einem Filter gefiltert wird, welches als Impulsantwort $h_{mf}(k)$ die zeitliche Umkehrung der Synchronisationssequenz hat, also

$$h_{mf}(k) = x_{SYNC}(N_{SYNC} - k),$$

wobei $N_{SYNC}$ die Anzahl Zeichen der Synchronisationssequenz ist. Im Falle komplexwertiger Signale, das heisst von Signalen, die sowohl durch einen Amplitudenwert als auch einen Phasenwert charakterisiert sind, ist

$$h_{mf}(k) = x^*_{SYNC} (N_{SYNC} - k),$$

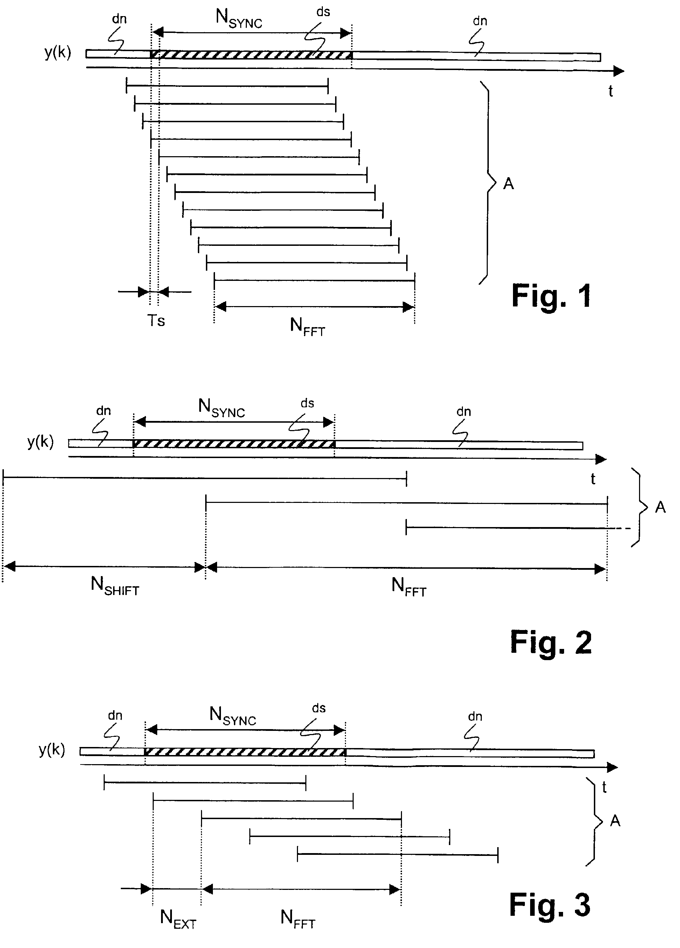

wobei * den konjugiert komplexen Wert bezeichnet. Der Ausgang dieses Korrelators weist Spitzen auf, die das Vorhandensein und die Position von empfangenen Synchronisationssequenzen anzeigen. Figur 1 zeigt jeweils um eine Zeichendauer Ts verschobene Ausschnitte A des empfangenen Signals y(k), die mit der gespeicherten Synchronisationssequenz korreliert werden. Die Synchronisationssequenz ist pseudozufällig und wird derart gewählt, dass sie für eine gegebene Länge NSYNC das Peak/Offpeak-Verhältnis ihrer Autokorrelation maximiert. Das Peak/Offpeak-Verhältnis ist gleich dem Verhältnis zwischen dem Wert der Spitze der Autokorrelation zum Wert ihrer höchsten Nebenspitze.

Ein derartiges Verfahren zur Synchronisation ist allgemein bekannt und beispielsweise in John G. Proakis, Digital Communications, 3rd edition, McGraw Hill 1995, Seite 745 beschrieben und wird üblicherweise auf digitalen Signalprozessoren (DSP) implementiert.

Mit zunehmendem $N_{SYNC}$ nimmt die Genauigkeit und Störfestigkeit der Synchronisation zu, da die Korrelation über eine grössere Anzahl von Synchronisationszeichen mittelt. Gleichzeitig nimmt aber auch der Bedarf an Rechenleistung und Speicherplatz zu.

In einer direkten Implementation der oben beschriebenen Korrelation wird diese mittels eines Filters der Länge $N_{SYNC}$ für ein Detektionsfenster, welches einen Ausschnitt von $N_{SYNC}$ Zeichen von y(k) enthält, wiederholt durchgeführt, wobei das Detektionsfenster jeweils um ein Zeichen, das heisst um die Zeit Ts verschoben wird (Figur 1).

Für ein gegebenes $N_{SYNC}$ benötigt diese direkte Implementation für jeden einzelnen Filterungsschritt um Ts eine Anzahl Speicherplätze der Ordnung $O(N_{SYNC})$ und eine Anzahl Operationen, das heisst Multiplikationen oder Additionen, der Ordnung $O(N_{SYNC}^2)$. Dadurch wird insbesondere die Anzahl Operationen prohibitiv gross.

Es sind, wie in A.V.Oppenheim and R.W.Schafer, Discrete-Time Signal Processing. Prentice Hall, Englewood Cliffs N.J., 1989, Seiten 548-560 beschrieben, auch Verfahren mittels der schnellen Fouriertransformation (Fast Fourier Transform, FFT) bekannt, die weniger Operationen benötigen, indem sie die Länge $N_{FFT}$ der Detektionsfenster jeweils grösser als $N_{SYNC}$ wählen, und die Detektionsfenster jeweils um $N_{SHIFT}$ Schritte verschieben (FFT overlap and add, Figur 2). Diese Verfahren benötigen jedoch wegen der Vergrösserung von $N_{FFT}$ einen grösseren Speicherbedarf und bedingen eine Verzögerung der Detektion der Synchronisation, die proportional zu $N_{SHIFT}$ ist.

**Darstellung der Erfindung**

Es ist deshalb Aufgabe der Erfindung, ein Verfahren zur Synchronisation der eingangs genannten Art zu schaffen, welches die oben genannten Nachteile behebt.

Diese Aufgabe löst ein Verfahren zur Synchronisation mit den Merkmalen des Patentanspruches 1.

In dem erfindungsgemässen Verfahren zur Synchronisation wird in einem Empfänger innerhalb eines Ausschnittes eines empfangenen Signals y(k), eines sogenannten Detektionsfensters, nach einer Synchronisationssequenz der Länge $N_{SYNC}$ gesucht, wobei die Länge $N_{FFT}$ des Detektionsfensters vorzugsweise mindestens annähernd gleich der Länge $N_{SYNC}$ ist und das Detektionsfenster jeweils sprungweise um $N_{EXT}$ Zeichen "hüpfend" verschoben wird. Dabei ist $N_{EXT}$ grösser als 1. In den Fällen, wo $N_{FFT}$ nicht gleich $N_{SYNC}$ ist, ist $N_{EXT}$ grösser als $N_{FFT}$-$N_{SYNC}$+1, jedoch nicht kleiner als 2.

Aus der Lage der empfangenen Synchronisationssequenz innerhalb des Detektionsfensters wird die genaue zeitliche Verschiebung zwischen diesen ermittelt. Anhand dieser zeitlichen Verschiebung wird eine im Empfänger laufende Uhr mit einer in einem Sender laufenden Uhr synchronisiert.

Die Synchronisationssequenz wird in einem Sender in einen Strom von Benutzerdaten eingefügt oder einem Block von Benutzerdaten vorangestellt. Der dadurch entstehende Datenstrom wird gesendet. Im Empfänger wird daraus ein empfangenes zeitdiskretes Signal y(k) gebildet.

Bei der paketweisen Übermittlung von Daten dient das erfindungsgemässe Verfahren vorzugsweise der Rahmensynchronisation. Bei der kontinuierlichen Übermittlung von Daten dient das erfindungsgemässe Verfahren vorzugsweise der Bit-, Zeichen-, oder Symbolsynchronisation.

In einer ersten bevorzugten Variante des erfindungsgemässen Verfahrens wird im Sender eine Synchronisationssequenz von $N_{SYNC}$ Zeichen zyklisch um NEXT Zeichen erweitert. Die erweiterte Synchronisationssequenz wird wie oben beschrieben mit den Benutzerdaten kombiniert und gesendet. Das Detektionsfenster des Empfängers hat vorzugsweise mindestens annähernd die Länge $N_{SYNC}$ und wird jeweils sprungweise um NEXT Zeichen verschoben. Durch die Erweiterung der Synchronisationssequenz ist garantiert, dass ungeachtet der Verschiebung zwischen den Synchronisationssequenzen und den Detektionsfenstern, eine vollständige, eventuell zyklisch verschobene empfangene Synchronisationssequenz in ein Detektionsfenster fällt. Mit zunehmendem $N_{EXT}$ nimmt auch die sprungweise Verschiebung der Detektionsfenster zu und damit der Rechenaufwand im Empfänger ab.

In einer zweiten bevorzugten Variante des erfindungsgemässen Verfahrens wird die Synchronisationssequenz durch die zyklische Erweiterung mindestens annähernd verdoppelt, also ist beispielsweise $N_{EXT} = N_{SYNC}$. Dadurch entsteht jedoch eine Mehrdeutigkeit, indem bei der Detektion einer Synchronisationssequenz nicht bekannt ist, welche der beiden Synchronisationssequenzen vorwiegend im Detektionsfenster liegt. Dieser Mehrdeutigkeit wird dadurch begegnet, dass jede der beiden Synchronisationssequenzen auf unterschiedliche Weise modifiziert oder markiert wird. Diese Markierung wird derart vorgenommen, dass sie sich kaum auf die Detektion einer Synchronisationssequenz als Ganzes auswirkt, jedoch eine Unterscheidung der beiden Synchronisationssequenzen erlaubt. Diese Variante bietet den Vorteil, dass, sobald eine Synchronisationssequenz detektiert wird, eine Synchronisation möglich ist, ohne dass weitere Korrelationswerte berücksichtigt werden müssen.

Vorteilhafterweise geschieht diese Markierung, indem die Phasendifferenz zweier Frequenzkomponenten der FFT einer Synchronisationssequenz auf einen bestimmten Wert gesetzt wird. Beispielsweise wird diese Phasendifferenz bei der ersten von zwei aufeinanderfolgenden Synchronisationssequenzen auf Null gesetzt, und die Phasendifferenz bei der zweiten auf $\pi$. Dies hat den Vorteil, dass der Einfluss übertragungsbedingter Phasenverschiebungen auf die Markierung verkleinert wird. Vorteilhafterweise werden für die Markierung zwei nahe beieinanderliegende Frequenzkomponenten gewählt, so dass sich eine allfällige frequenzabhängige Phasenverschiebung durch die Übertragung auf beide Frequenzkomponenten möglichst in gleicher Weise auswirkt.

In einer dritten bevorzugten Variante des erfindungsgemässen Verfahrens wird die Synchronisationssequenz durch die zyklische Erweiterung ebenfalls mindestens annähernd verdoppelt, also ist beispielsweise wiederum $N_{EXT} = N_{SYNC}$. Der dadurch entstehenden Mehrdeutigkeit beim Empfang der Synchronisationssequenz wird dadurch begegnet, dass die Resultate von mehreren aufeinanderfolgenden Korrelationen gemeinsam ausgewertet werden. Diese Variante bietet den Vorteil, dass kein Aufwand zur Einführung und Detektion einer Markierung getrieben wird.

In einer vierten bevorzugten Variante des erfindungsgemässen Verfahrens wird die Synchronisationssequenz nicht erweitert, also ist $N_{EXT} = 0$. Der entstehenden Unsicherheit und Mehrdeutigkeit beim Empfang der Synchronisationssequenz wird dadurch begegnet, dass die Resultate von mehreren aufeinanderfolgenden Korrelationen gemeinsam ausgewertet werden. Diese Variante bietet den Vorteil, dass sie mit einem Minimum an Rechenaufwand im Empfänger auskommt, und gleichzeitig die Synchronisationssequenz nicht auf Kosten von Benutzerdaten erweitert wird.

Das erfindungsgemässe Verfahren ist in logischer Weise erweiterbar, indem die Synchronisationssequenz um beliebig grosse Werte $N_{EXT}$ erweitert wird und entsprechend die Verschiebung von Detektionsfenstern um $N_{EXT}$ Zeichen vorgenommen wird.

Weitere bevorzugte Varianten gehen aus den abhängigen Patentansprüchen hervor.

## Kurze Beschreibung der Zeichnungen

Im folgenden wird das erfindungsgemässe Verfahren anhand bevorzugter Varianten, welche in den beiliegenden Zeichnungen dargestellt sind, näher erläutert. Es zeigen

Figur 1    die relative Lage eines empfangenen Signals zu Detektionsfenstern gemäss dem Stand der Technik, wobei die Detektionsfenster um jeweils einen Schritt verschoben sind;

Figur 2    die relative Lage eines empfangenen Signals zu Detektionsfenstern gemäss dem Stand der Technik, wobei die Detektionsfenster um jeweils $N_{SHIFT}$ Schritte verschoben sind;

Figur 3    verschiedene Fälle der zeitlichen Überlappung von Detektionsfenstern mit sprungweise verschobenen Detektionsfenstern gemäss dem erfindungsgemässen Verfahren;

Figur 4    verschiedene Fälle der zeitlichen Überlappung von Detektionsfenstern mit einer erweiterten Synchronisationssequenz gemäss einer ersten bevorzugten Variante des erfindungsgemässen Verfahrens;

Figur 5    verschiedene Fälle der zeitlichen Überlappung von Detektionsfenstern mit einer erfindungsgemäss verdoppelten Synchronisationssequenz, zusammen mit dazugehörigen Korrelationssignalen, gemäss einer zweiten und einer dritten bevorzugten Variante des erfindungsgemässen Verfahrens;

Figur 6    Korrelationssignale simuliert mit einer rauschbehafteten Übertragungsstrecke, gemäss einer zweiten bevorzugten Variante des erfindungsgemässen Verfahrens; und

Figur 7    verschiedene Fälle der zeitlichen Überlappung von Detektionsfenstern, zusammen mit dazugehörigen Korrelationssignalen, gemäss einer vierten bevorzugten Variante des erfindungsgemässen Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die Buchstaben A, B, C, D bezeichnen jeweils zusammen auftretende Fälle von nacheinander auftretenden Verschiebungen zwischen einem empfangenen Signal und mehreren Detektionsfenstern. Beispielsweise treten beim Empfang einer bestimmten Synchronisationssequenz mit einem bestimmten Verfahren alle unter A zusammengefassten Verschiebungen auf.

## Wege zur Ausführung der Erfindung

Die Figur 3 zeigt eine Gruppe A von Fällen der zeitlichen Überlappung von gemäss der Erfindung sprungweise um jeweils $N_{EXT}$ Zeichen verschobenen Detektionsfenstern der Länge $N_{FFT}$ mit einem empfangenen Signal y(k). Das empfangene Signal y(k) enthält eine Synchronisationssequenz. In Figur 3 ist diese mit einer Länge $N_{SYNC}$ gezeigt, in einzelnen bevorzugten Varianten ist sie jedoch zyklisch erweitert. Benutzerdaten sind mit dn bezeichnet, Synchronisationsdaten mit ds, die Zeitachse mit t.

Das erfindungsgemässe Verfahren funktioniert wie folgt: Es wird eine pseudozufällige Synchronisationssequenz mit einer Länge von $N_{SYNC}$ Zeichen bestimmt, die das Peak/Offpeak-Verhältnis ihrer Autokorrelation maximiert. In einem Sender wird die derart erweiterte Synchronisationssequenz periodisch in einen Strom von zu übertragenden Benutzerdaten eingefügt oder einem Paket von Benutzerdaten vorangestellt, und die dadurch entstehende Signalfolge wird gesendet.

In einem von eventuell mehreren Empfängern wird daraus ein empfangenes zeitdiskretes Signal y(k) gebildet. Um die Lage der Synchronisationssequenz und daraus die genaue zeitliche Verschiebung zwischen Sender und Empfänger zu bestimmen, wird innerhalb des empfangenen Signals nach der Synchronisationssequenz gesucht. Dazu wird innerhalb eines Ausschnittes von mindestens annähernd $N_{SYNC}$ oder mehr Zeichen des empfangenen Signals, eines sogenannten Detektionsfensters, nach der Synchronisationssequenz gesucht. Diese Suche geschieht beispielsweise durch Korrelation der im Detektionsfenster enthaltenen Zeichenfolge mit einer im Empfänger gespeicherten Version der Synchronisationssequenz. Das Resultat der Suche ist, aufgrund eines Maximums der Korrelation, eine Aussage über das Vorhandensein einer empfangenen Synchronisationssequenz sowie über deren zeitliche Verschiebung gegenüber dem Detektionsfenster. Anhand dieser zeitlichen Verschiebung wird eine im Empfänger laufende Uhr mit einer im Sender laufenden Uhr synchronisiert. Die Suche nach der Synchronisationssequenz wird zyklisch durchgeführt, indem vor jeder Suche das Detektionsfenster um $N_{EXT}$ Schritte verschoben wird.

In einer ersten bevorzugten Variante des erfindungsgemässen Verfahrens wird die Synchronisationssequenz zyklisch um $N_{EXT}$ Zeichen erweitert, das heisst, dass die ersten $N_{EXT}$ Zeichen der Synchronisationssequenz an das Ende der Synchronisationssequenz angehängt werden. Ohne das Prinzip der Erfindung zu verändern, können auch die letzten $N_{EXT}$ Zeichen der Synchronisationssequenz der Synchronisationssequenz vorangestellt werden. Die erweiterte Synchronisationssequenz wird wie oben beschrieben mit den Benutzerdaten kombiniert und gesendet. Da im Empfänger vor jeder Suche das Detektionsfenster um $N_{EXT}$ Schritte verschoben wird, ist garantiert, dass eine vollständige, eventuell zyklisch verschobene Synchronisationssequenz in ein Detektionsfenster fällt.

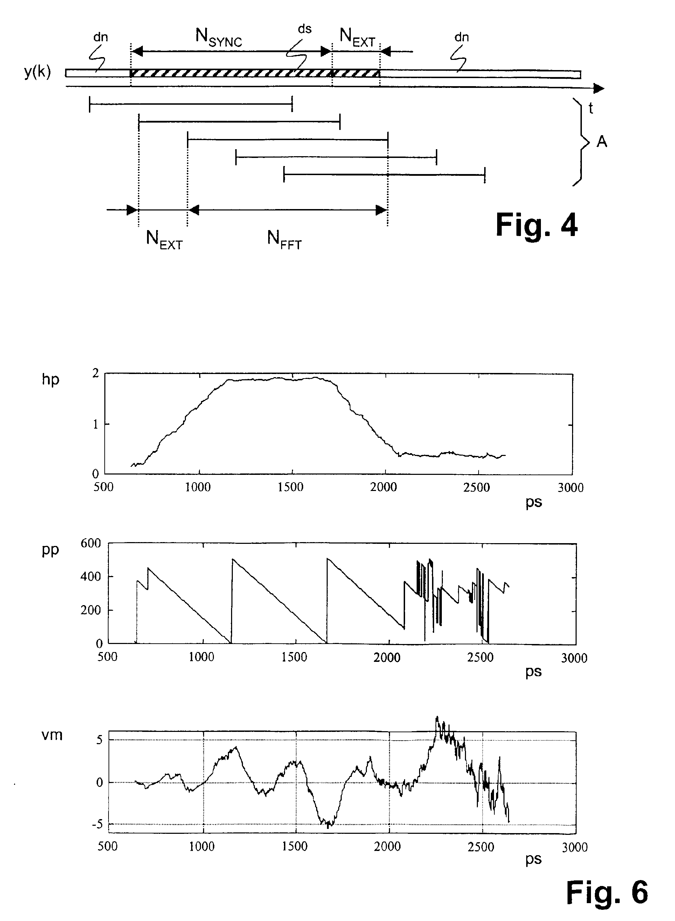

Die Figur 4 zeigt eine Gruppe A von Fällen der zeitlichen Überlappung von Detektionsfenstern mit einer gemäss dieser ersten bevorzugten Variante erweiterten Synchronisationssequenz.

Der Parameter $N_{EXT}$ kann variiert werden. Dabei geht eine Verlängerung der Erweiterung der Synchronisationssequenz mit einer Reduktion des Rechenaufwandes im Empfänger einher. Somit ist die Wahl von $N_{EXT}$ in Abhängigkeit der Anforderungen an die Datenübertragung, den Rechenaufwand und an die Häufigkeit, mit der eine Synchronisation geschehen soll, zu optimieren. Vorzugsweise ist $N_{EXT}$ grösser als ein Viertel von $N_{SYNC}$, beispielsweise gleich der Hälfte von $N_{SYNC}$.

In einer zweiten und einer dritten bevorzugten Variante des erfindungsgemässen Verfahrens wird die Synchronisationssequenz durch die zyklische Erweiterung verdoppelt. In diesem Falle ist also $N_{EXT} = N_{SYNC}$. Vorteilhafterweise wird die Länge $N_{FFT}$ des Detektionsfensters ebenfalls gleich $N_{SYNC}$ gewählt. Damit folgen die einzelnen Detektionsfenster jeweils um $N_{EXT} = N_{FFT}$ Zeichen verschoben aufeinander, also direkt aneinander anschliessend und ohne sich zu überlappen. Der Rechenaufwand zur Synchronisation ist dann von der Ordnung $N_{SYNC} * \log_2(N_{SYNC})$.

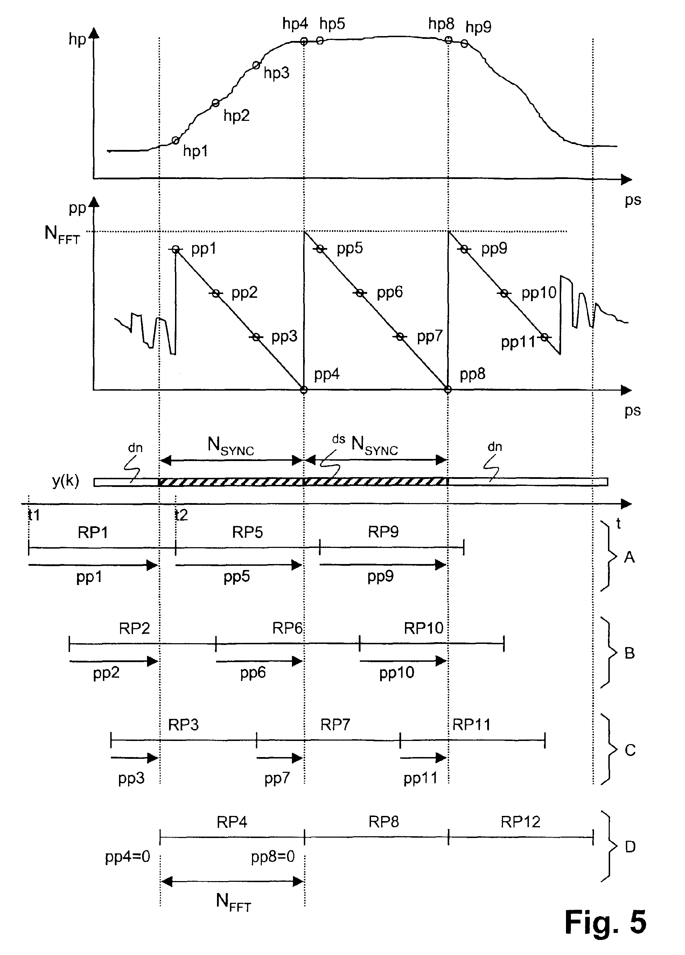

Figur 5 zeigt verschiedene Fälle der zeitlichen Überlappung von Detektionsfenstern mit einer verdoppelten Synchronisationssequenz, zusammen mit dazugehörigen Korrelationssignalen. Die verschiedenen Fälle sind mit RP1 bis RP12 bezeichnet. Die Fälle sind zu Fallgruppen A bis D zusammengefasst. Jede Fallgruppe entspricht einem anderen konkreten Fall des Empfangs einer Synchronisationssequenz. Es können selbstverständlich auch andere, nicht gezeigte, konkrete Fälle und Fallgruppen auftreten. Entlang der Abszisse der beiden Graphen ist eine Verschiebung ps der Synchronisationssequenzen gegenüber einem Detektionsfenster aufgetragen. Eine Ordinate pp zeigt eine detektierte Position der Synchronisationssequenz relativ zum Detektionsfenster, modulo $N_{FFT}$. Eine Ordinate hp zeigt eine Höhe des Korrelationssignals, das heisst den Wert des Maximums der Korrelation der Synchronisationssequenz mit einem dem Detektionsfenster entsprechenden Ausschnitt aus dem empfangenen Signal.

Beispielsweise wird im Falle RP1 ein Detektionsfenster, das bei t1 beginnt und bei t2 endet, mit der gespeicherten Synchronisationssequenz korreliert. Es liegt eine geringe Überlappung zwischen dem Detektionsfenster und der ersten empfangenen Synchronisationssequenz vor. Die Korrelation hp1 ist entsprechend klein, und die relative Position ppl ist nahe bei NFFT.

In den nächsten gezeigten Fällen RP2, RP3 ist bei grösserer Überlappung auch die Korrelation hp2, hp3 entsprechend grösser und die relative Position pp2, pp3 entsprechend kleiner. Bei vollständiger Überlappung RP4 ist die Korrelation hp maximal und die relative Position pp4 ist null.

In den folgenden Fällen RP5 bis RP8 liegt immer eine ganze, zyklisch verschobene empfangene Synchronisationssequenz im Detektionsfenster. Die Korrelation hp ist in allen diesen Fällen maximal. Die relative Position, die ja modulo $N_{FFT}$ bestimmt wird und somit den Abstand zum kommenden Ende der empfangenen Synchronisationssequenz wiedergibt, geht linear mit der Verschiebung der Detektionsfenster von $N_{FFT}$ nach Null.

In den weiteren Fällen RP9 bis RP12 enthält das Detektionsfenster einen kleiner werdenden Teil der empfangenen Synchronisationssequenz, so dass die Korrelation abnimmt.

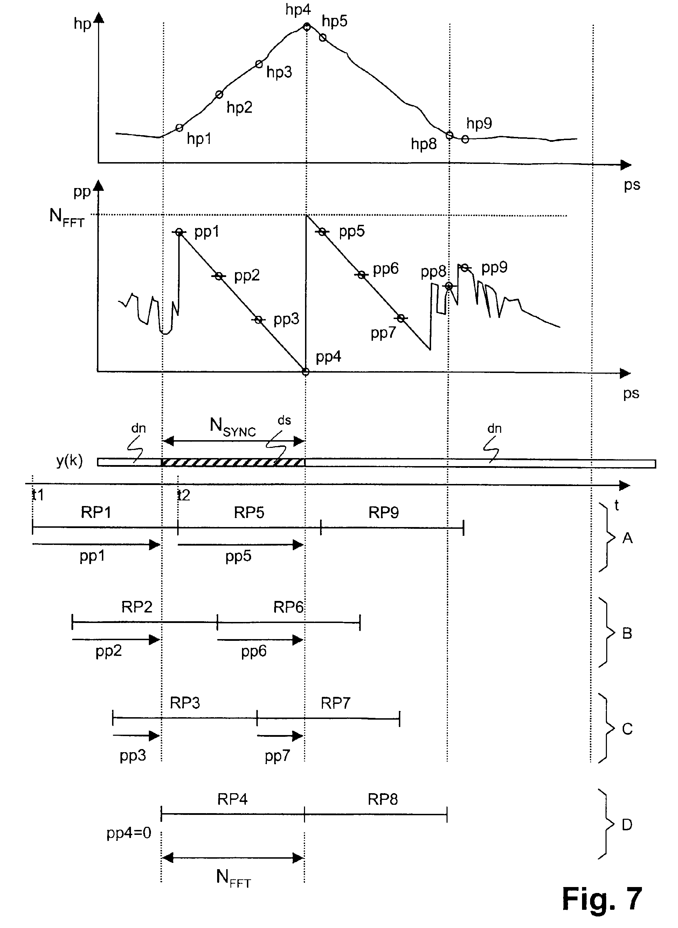

Die in Figur 5 gezeigten Korrelationssignale hp und pp sind idealisiert. In einer realen, störungsbehafteten Übertragungsstrecke sind die Signale verrauscht, wie in Figur 6 anhand einer simulierten, rauschbehafteten Übertragung gezeigt ist.

Beim Empfang einer bestimmten erweiterten Synchronisationssequenz werden nur einzelne der oben beschriebenen Fälle RP1 bis RP12 auftreten. Beispielsweise sind dies die Fälle RP1,RP5 und RP9. Dieses Tripel ist in Figur 5 als Fallgruppe A bezeichnet, weitere Tripel mit B, C und D. Als Grundlage für die angestrebte Bestimmung der zeitlichen Lage der Synchronisationssequenz liegen im ersten Fall die Werte ppl,hpl,pp5,hp5,pp9,hp9 vor. Auch ist in den Figuren 1-5 und 7 jeweils nur ein kleiner Teil von möglichen Lagen von Detektionsfenstern gezeichnet, selbstverständlich können dazwischenliegende Fälle auftreten.

In der zweiten bevorzugten Variante des erfindungsgemässen Verfahrens wird anhand eines einzigen Detektionsfensters dessen zeitliche Lage bestimmt. Somit muss unterschieden werden, ob eine detektierte Synchronisationssequenz die erste oder die zweite einer verdoppelten Synchronisationssequenz ist. Dies ist insbesondere dann nötig, wenn beide detektierte Synchronisationssequenzen eine Korrelation nahe bei der maximalen Korrelation aufweisen. Beispielsweise können die Fälle RP4 und RP8 auftreten, die sich aufgrund der Werte von hp und pp nicht unterscheiden lassen.

Zur Unterscheidung dieser Mehrdeutigkeit sind verschiedene Methoden möglich:

1. Plausibilitätsuntersuchung
2. Markierung im Zeitbereich
3. Markierung durch Setzen der Phase einer Frequenzkomponente der FFT der Synchronisationssequenz.
4. Markierung durch Setzen der Phasendifferenz zweier Frequenzkomponenten der FFT der Synchronisationssequenz.

Bei der Plausibilitätsuntersuchung wird nach der Detektion einer Synchronisationssequenz angenommen, dass die folgenden Zeichen Benutzerdaten sind. Diese Zeichen werden als Benutzerdaten weiterverarbeitet, das heisst demoduliert oder decodiert. Falls das Resultat dieser Weiterverarbeitung eine niedrige Signalqualität aufweist, wird gefolgert, dass die verarbeiteten Zeichen zu einer zweiten Synchronisationssequenz gehören, und dass die Benutzerdaten $N_{SYNC}$ Zeichen später beginnen.

Bei der Markierung im Zeitbereich wird beispielsweise ein bestimmtes Zeichen der Synchronisationssequenz, welches den Wert w hat, in der einen der beiden Synchronisationssequenzen unverändert belassen und in der anderen der beiden Synchronisationssequenz auf einen bestimmten Wert, beispielsweise -w gesetzt. Falls der Wertebereich von w nur null oder eins enthält, wird w in der einen Synchronisationssequenz auf null, in der anderen Synchronisationssequenz auf eins gesetzt. Diese Markierung hat einen geringen Einfluss auf die Korrelationseigenschaften der ganzen Synchronisationssequenz, wobei dieser Einfluss mit zunehmender Länge der Synchronisationssequenz abnimmt.

Bei der Markierung durch Setzen der Phase einer Frequenzkomponente der FFT der Synchronisationssequenz wird die FFT-Transformierte der Synchronisationssequenz $X_{SYNC}(f)=FFT(x_{SYNC}(k))$ bestimmt. Falls, wie bei einem Mehrträger-Modulationssystem, die Synchronisationssequenz bereits im Frequenzbereich als $X_{SYNC}(f)$ vorliegt, entfällt dieser Schritt. Die m-te Frequenzkomponente $X_{SYNC}(f_m)$ wird auf einen Wert $Ae^{j\phi}$ gesetzt, erhält also eine Amplitude A und eine Phase $\phi$. Falls die Rücktransformierte $x_{SYNC}(k)$ reellwertig sein soll, muss die Frequenzkomponente $X_{SYNC}(N_{SYNC}-f_m)$ auf den Wert $Ae^{-j\phi}$ gesetzt werden. Beispielsweise wird für die Phase $\phi$ in der einen der beiden Synchronisationssequenzen der Wert null gewählt und in der anderen der beiden Synchronisationssequenzen der Wert $\pi$ gewählt. Aus dem modifizierten $X_{SYNC}$ wird durch eine inverse schnelle Fouriertransformation (IFFT) eine markierte Synchronisationssequenz $x_{SYNC}(k)=IFFT(X_{SYNC}(f))$ gebildet. Die Markierung hat einen geringen Einfluss auf die Korrelationseigenschaften der ganzen Synchronisationssequenz, wobei dieser Einfluss mit zunehmender Länge der Synchronisationssequenz abnimmt.

Im Empfänger wird die Fouriertransformierte der empfangenen Synchronisationssequenz gebildet. Anhand der Phase der m-ten Frequenzkomponente wird zwischen der ersten und der zweiten Synchronisationssequenz unterschieden, so dass der Beginn der Benutzerdaten eindeutig bestimmt ist.

Dieses Verfahren der Markierung durch Setzen der Phase einer Frequenzkomponente der FFT der Synchronisationssequenz hat den Vorteil, dass es unempfindlich gegenüber Rauschen im Zeitbereich ist.

Bei der Markierung durch Setzen der Phasendifferenz zweier Frequenzkomponenten der FFT der Synchronisationssequenz wird, wie im vorangehenden Fall, die FFT-Transformierte der Synchronisationssequenz, also $X_{SYNC}(f)=FFT(x_{SYNC}(k))$ bestimmt. Falls, wie bei einem Mehrträger-Modulationssystem, die Synchronisationssequenz bereits im Frequenzbereich als $X_{SYNC}(f)$ vorliegt, entfällt dieser Schritt. Es sind zwei Markierungsfrequenzen $f_{m1}$ und $f_{m2}$ vorgegeben. Dabei liegen diese Markierungsfrequenzen vorzugsweise direkt nebeneinander, das heisst beispielsweise m2=m1+1, so dass sich eine übertragungsbedingte frequenzabhängige Phasenverschiebung nur minimal auswirkt. Zur Markierung werden die Werte von $X_{SYNC}(f_{m1})$ und $X_{SYNC}(f_{m2})$ derart modifiziert, dass ihre Phasendifferenz $\varphi$ einen bestimmten Wert aufweist. Beispielsweise wird für die Phasendifferenz ($\varphi$ in der einen der beiden Synchronisationssequenzen der Wert null gewählt und in der anderen der beiden Synchronisationssequenzen der Wert $\pi$ gewählt. Dies geschieht beispielsweise, indem in für eine der beiden Synchronisationssequenzen $X_{SYNC}(f_{m1})=X_{SYNC}(f_{m2})$ gesetzt wird, und für die andere der beiden Synchronisationssequenzen $X_{SYNC}(f_{m1})=-X_{SYNC}(f_{m2})$ gesetzt wird. Falls die Rücktransformierte $x_{SYNC}(k)$ reellwertig sein soll, müssen die übrigen Frequenzkomponenten angepasst werden, so dass die Fouriertransformierte symmetrisch ist, das heisst $X_{SYNC}(f)=X^*_{SYNC}(N_{SYNC}-f)$, wobei X* den konjugiert komplexen Wert von X bezeichnet.

Aus dem modifizierten $X_{SYNC}$ wird durch eine inverse schnelle Fouriertransformation (IFFT) eine markierte Synchronisationssequenz $x_{SYNC}(k) =IFFT (X_{SYNC}(f))$ gebildet. Diese Markierung hat einen geringen Einfluss auf die Korrelationseigenschaften der ganzen Synchronisationssequenz, wobei dieser Einfluss mit zunehmender Länge der Synchronisationssequenz abnimmt.

Im Empfänger wird die Fouriertransformierte der empfangenen Synchronisationssequenz gebildet. Anhand der Phasendifferenz zwischen der ml-ten und der m2-ten Frequenzkomponente wird zwischen der ersten und der zweiten Synchronisationssequenz unterschieden. Diese Phasendifferenz wird beispielsweise als Realteil von $Y(f_{m1})$ * $Y^*(f_{m2})$ bestimmt. Die Herleitung dieser Formel ist beispielsweise in John G. Proakis, Digital Communications, 3rd edition, McGraw Hill 1995, Seite 274-275 beschrieben. Das Vorzeichen dieser Phasendifferenz zeigt an, welche von zwei aufeinanderfolgenden Synchronisationssequenzen detektiert wurde, so dass der Beginn der Benutzerdaten eindeutig bestimmt ist.

Dieses Verfahren der Markierung durch Setzen der Phasendifferenz zweier Frequenzkomponenten der FFT der Synchronisationssequenz hat den Vorteil, dass es unempfindlich gegenüber Rauschen im Zeitbereich ist, und dass der Einfluss von übertragungsbedingten Phasendrehungen minimiert wird .

Figur 6 zeigt zusätzlich zu Korrelationsresultaten pp und hp auch die Resultate der detektierten Markierung vm, wobei vm gleich dem Realteil von $Y(f_{m1})$ * $Y^*(f_{m2})$ ist. Falls das Detektionsfenster, wie im Fall RP6, ungefähr je die Hälfte beider Synchronisationssequenzen beinhaltet, erlaubt erwartungsgemäss die Markierung keine Aussage, ob die erste oder die zweite Synchronisationssequenz vorliegt. In diesem Falle erlaubt aber der Wert hp6 der Korrelation eine eindeutige Aussage. Umgekehrt hat in den Fällen, wo die Korrelation keine eindeutige Aussage erlaubt, die Markierung eine eindeutige Aussage.

Ein Verfahren zur Synchronisation auf einen Datenstrom, das heisst zur Bestimmung eines Startzeitpunktes d des ersten Zeichens der an die Synchronisationssequenzen anschliessenden Benutzerdaten, ist im folgenden Pseudocode dargestellt. Dabei wird eine Markierung durch die Phasendifferenz zweier Frequenzkomponenten der FFT der Synchronisationssequenz vorausgesetzt. Das Verfahren kann in offensichtlicher Weise der Verwendung anderer Markierungsverfahren angepasst werden.

Im folgenden Pseudocode steht "≈" für "ungefähr gleich". Schwellwerte für diesen Vergleich sowie der Wert der Variablen "Grenzwert" werden durch Minimierung der Wahrscheinlichkeit fehlerhafter Synchronisation ermittelt.

**Pseudocode für Synchronisationsverfahren**

```
s = Index des ersten Zeichens des Detektionsfensters
K(i) = FFT-basierte Korrelation von y(k) mit der Synchronisationssequenz, wobei k=s...s+N_SYNC
hp = Maximum der Absolutwerte von K(i)
pp = Position des Maximums der Absolutwerte von K(i) if (hp > Grenzwert) then

        es wurde eine Synchronisationssequenz detektiert
        Y(f)=FFT(y(k)), wobei k=s...s+N_SYNC
        marker = Realteil von Y(f_m1) * Y*(f_m2)
        if (pp ≈ N_SYNC/2) then d = s + pp + N_SYNC endif
        if (pp ≈ 0 and marker > 0) then d = s + pp + 2*N_SYNC endif
        if (pp ≈ N_SYNC and marker > 0) then d = s + pp + N_SYNC endif
        if (pp ≈ 0 and marker < 0) then d = s + pp + N_SYNC endif
        if (pp ≈ N_SYNC and marker < 0) then d = s + pp endif
        d ist der Index des ersten Zeichens der Benutzerdaten
        else
        es wurde keine Synchronisationssequenz detektiert
        s = s + N_SYNC
        endif
```

In der dritten bevorzugten Variante des erfindungsgemässen Verfahrens wird die Synchronisation und die Unterscheidung zwischen der ersten und dem zweiten empfangenen Synchronisationssequenz anhand der Korrelationssignale hp und pp von mehreren aufeinanderfolgenden Detektionsfenstern vorgenommen. Nach jeder um $N_{SYNC}$ = $N_{EXT}$ = $N_{FFT}$ verschobenen Korrelation des Detektionsfensters mit der gespeicherten Synchronisationssequenz werden die neu ermittelten Werte hp und pp und die letzten jeweils n Werte von hp und pp aus den vorangehenden n Korrelationen analysiert. Dies geschieht in folgender Weise: Die letzten Werte von pp und hp werden mit pp', hp' bezeichnet, die vorletzten mit pp", hp". Für die verschiedenen in Figur 5 auftretenden Fälle treten die Kombinationen aus der folgenden Tabelle auf, wobei nur jene Fälle eingetragen sind, bei denen mindestens ein Wert von hp, hp' oder hp" grösser als ein vorgegebener Grenzwert bnd ist. Ein Eintrag in der zweiten bis 7 Kolonne der Tabelle bedeutet, dass der in der Kopfzeile der Tabelle stehende Wert eine Bedingung entsprechend dem Eintrag erfüllen muss. Fehlt ein solcher Eintrag, so ist der Wert für die Entscheidung, ob der betreffende Fall vorliegt, irrelevant oder erlaubt keine Aussage. Die Werte min, max und bnd sowie Schwellwerte für den Vergleichsoperator "≈" werden durch Minimierung der Wahrscheinlichkeit fehlerhafter Synchronisation ermittelt.

Die letzte Kolonne der Tabelle zeigt die Formel zur Berechnung des gesuchten Index d des ersten Zeichens der Benutzerdaten aus dem Index s des ersten Zeichens des aktuellen Detektionsfensters.

| Fall | pp" | pp' | pp | hp" | hp' | hp | d |
|---|---|---|---|---|---|---|---|
| RP2,3 | | | | ≈min | ≈min | >bnd | $s+pp+2*N_{SYNC}$ |
| RP4 | | | ≈0 | ≈min | ≈min | ≈max | $s+pp+2*N_{SYNC}$ |
| RP4 | | | ≈$N_{SYNC}$ | ≈min | ≈min | ≈max | $s+pp+N_{SYNC}$ |
| RP5 | | =pp | | ≈min | ≈min | ≈max | $s+pp+N_{SYNC}$ |
| RP6,7 | | =pp | | ≈min | >bnd | ≈max | $s+pp+N_{SYNC}$ |
| RP8 | | =pp | ≈0 | ≈min | ≈max | ≈max | $s+pp+N_{SYNC}$ |

(fortgesetzt)

| Fall | pp" | pp' | pp | hp" | hp' | hp | d |
|------|-----|-----|-----|-----|-----|-----|---|
| RP8 | | =pp | ≈$N_{SYNC}$ | ≈min | ≈max | ≈max | s+pp |
| RP9 | =pp' | =pp | | ≈min | ≈max | >bnd | s+pp |
| RP10,11 | =pp' | =pp | | >bnd | ≈max | >bnd | s+pp |
| RP12 | =pp' | | | ≈max | ≈max | ≈min | s+pp |

Zur Bestimmung, welcher Fall vorliegt, wird für jeden Fall getestet, ob die vorliegenden n+1 Wertepaare hp, pp die Bedingungen der entsprechenden Tabellenzeile erfüllen. Vorteilhafterweise wird zur Erhöhung der Zuverlässigkeit der Synchronisation berücksichtigt, dass die verschiedenen Fälle jeweils in Paaren oder Tripeln auftreten müssen. Beispielsweise sollte auf einen Fall RP2 ein Fall RP6 und dann ein Fall RP10 folgen.

Der Entscheid, welcher Fall vorliegt, geschieht beispielsweise mittels eines Entscheidungsbaumes oder mittels Fuzzy-Logik. Bei der Fallunterscheidung wird die Redundanz der in hp und pp vorliegenden Information genutzt, um den Rechenaufwand oder die Zuverlässigkeit der Analyse zu maximieren. Bei guten Übertragungseigenschaften wird n=1 gewählt, bei schlechteren n=2.

In einer anderen vorteilhaften Ausführung werden nicht die einzelnen Fälle unterschieden, sondern nur jene drei Gruppen von Fällen, die sich in der Berechnung von d unterscheiden.

In einer vierten bevorzugten Variante des erfindungsgemässen Verfahrens wird die Synchronisationssequenz der Länge NSYNC nicht erweitert. Die oben beschriebene Suche nach der Synchronisationssequenz wird zyklisch durchgeführt, indem vor jeder Suche das Detektionsfenster um $N_{SYNC}$ Schritte verschoben wird. Vorteilhafterweise wird die Länge $N_{FFT}$ des Detektionsfensters gleich $N_{SYNC}$ gewählt. Damit folgen die einzelnen Detektionsfenster jeweils um $N_{SYNC} = N_{FFT}$ Zeichen verschoben aufeinander, also direkt aneinander anschliessend und ohne sich zu überlappen. Der Rechenaufwand für die zur Synchronisation benötigten FFTs ist dann gleich gross wie bei der zweiten und dritten bevorzugten Variante. Der Vorteil dieser vierten bevorzugten Variante liegt darin, dass sie eine kürzere Synchronisationssequenz und damit ein grösseres Verhältnis zwischen Nutz- und Synchronisationszeichen aufweist.

Figur 7 zeigt, analog zu Figur 5, verschiedene Fälle der zeitlichen Überlappung von Detektionsfenstern, zusammen mit dazugehörigen Korrelationssignalen, wobei in Figur 7 die Synchronisationssequenz nicht verdoppelt ist. Analog zu der Tabelle der dritten bevorzugten Variante zeigt die folgende Tabelle die auftreten Fälle und die entsprechenden Bedingungen für die Korrelationssignale hp und pp.

| Fall | pp" | pp' | pp | hp" | hp' | hp | d |
|------|-----|-----|-----|-----|-----|-----|---|
| RP2,3 | | | | ≈min | ≈min | >bnd | s+pp+$N_{SYNC}$ |
| RP4 | | | ≈0 | ≈min | ≈min | ≈max | s+pp+$N_{SYNC}$ |
| RP4 | | | ≈$N_{SYNC}$ | ≈min | ≈min | ≈max | s+pp |
| RP5 | | =pp | | ≈min | ≈min | >bnd | s+pp |
| RP6,7 | | =pp | | ≈min | >bnd | >bnd | s+pp |
| RP8 | | | | ≈min | ≈max | ≈min | s+pp |

Die Bestimmung, welcher Fall vorliegt, geschieht analog zur dritten bevorzugten Variante. Dabei wird vorzugsweise n=1 gewählt, das heisst es werden nur die letzten Wert pp' und hp' der Korrelationssignale pp respektive hp gespeichert und verwendet.

Die folgende Tabelle zeigt einen Vergleich der Verfahren gemäss dem Stand der Technik mit dem erfindungsgemässen Verfahren. Dabei wird eine Abtastrate von 288 kHz und ein $N_{SYNC}$ von 512 verwendet. Die letzte Zeile zeigt den Aufwand für das erfindungsgemässe Verfahren in seiner zweiten, dritten und vierten Variante.

| Verfahren | $N_{FFT}$ | $N_{SHIFT}$ | Rechenaufwand MOps/s | worst case delay |
|-----------|-----------|-------------|----------------------|------------------|
| direkte Filterung | | 1 | 147.5 | |
| FFT overlap and add | 1024 | 512 | 11.5 | 2048 |
| FFT overlap and add | 4096 | 3584 | 7.9 | 8192 |

(fortgesetzt)

| Verfahren | $N_{FFT}$ | $N_{SHIFT}$ | Rechenaufwand MOps/s | worst case delay |
|---|---|---|---|---|
| gemäss Erfindung, | 512 | 512 | 5.2 | 512 |

Das erfindungsgemässe Verfahren ergibt in seinen verschiedenen Varianten gute Synchronisationseigenschaften bei kleinem Rechenaufwand.

**Bezugszeichenliste**

| | |
|---|---|
| A,B,C,D | Fallgruppen von nacheinander auftretende Fällen der Verschiebung zwischen Detektionsfenster und empfangenem Signal. |
| dn | Benutzerdaten |
| ds | Synchronisationsdaten |
| hp | Wert des Korrelationsmaximums im Detektionsfenster mit einer gespeicherten Synchronisationssequenz |
| hp1..hp12 | Werte von hp für verschiedene Fälle. |
| $N_{EXT}$ | Erweiterung einer Synchronisationssequenz |
| $N_{FFT}$ | Länge eines Detektionsfensters |
| $N_{SHIFT}$ | Verschiebung eines Detektionsfensters beim overlap and add Verfahren |
| $N_{SYNC}$ | Länge einer Synchronisationssequenz |
| pp | detektierte Position des Maximums der Korrelation eines Detektionsfensters mit einer empfangenen Synchronisationssequenz, relativ zum Detektionsfenster. |
| pp1..pp12 | Werte von pp für verschiedene Fälle. |
| ps | Verschiebung von empfangenen Synchronisationssequenzen gegenüber einem Detektionsfenster |
| RP1..RP12 | Verschiedene Fälle der Verschiebung zwischen Detektionsfenster und empfangenem Signal. |
| t | Zeitachse |
| t1, t2 | Zeitpunkt des ersten und des letzten Zeichens des Detektionsfensters im Fall RP1. |
| Ts | Zeitliche Länge eines übertragenen Zeichens |
| vm | Wert der Markierung einer empfangenen Synchronisationssequenz |
| y(k) | Empfangenes Signal y(k) |

**Patentansprüche**

1. Verfahren zur Synchronisation in einem Datenübertragungssystem, bei dem eine Synchronisationssequenz der Länge $N_{SYNC}$ zur zeitlichen Synchronisation eines Senders mit einem oder mehreren Empfängern übertragen wird, und bei dem Ausschnitte oder Detektionsfenster der Länge $N_{FFT}$ eines empfangenen Signals mit einer gespeicherten Version der Synchronisationssequenz korreliert werden,
dadurch gekennzeichnet,
dass die Detektionsfenster, deren Länge $N_{FFT}$ vorzugsweise mindestens annähernd gleich der Länge $N_{SYNC}$ ist, jeweils um $N_{EXT}$ Werte gegeneinander verschoben werden, wobei $N_{EXT}$ grösser als $N_{FFT}-N_{SYNC}+1$ und nicht kleiner als 2 ist.

2. Verfahren gemäss Anspruch 1, dadurch gekennzeichnet, dass die Synchronisationssequenz im Zeitbereich zyklisch um $N_{EXT}$ Werte erweitert wird und die erweiterte Synchronisationssequenz übertragen wird.

3. Verfahren gemäss Anspruch 2, dadurch gekennzeichnet, dass $N_{EXT}$ mindestens annähernd $N_{SYNC}$ ist, so dass mindestens annähernd zwei aufeinanderfolgende Synchronisationssequenzen übertragen werden.

4. Verfahren gemäss Anspruch 3, dadurch gekennzeichnet, dass die beiden Synchronisationssequenzen vor der Übertragung modifiziert werden, so dass sie sich durch eine Markierung unterscheiden.

5. Verfahren gemäss Anspruch 4, dadurch gekennzeichnet, dass zur Markierung der beiden Synchronisationssequenzen die Phasendifferenz zweier Frequenzkomponenten der FFT einer Synchronisationssequenz auf einen bestimmten Wert gesetzt wird.

6. Verfahren gemäss Anspruch 4, dadurch gekennzeichnet, dass zur Markierung der beiden Synchronisationssequenzen die Phase einer Frequenzkomponente der FFT einer Synchronisationssequenz auf einen bestimmten Wert gesetzt wird.

7. Verfahren gemäss Anspruch 3, dadurch gekennzeichnet, dass Resultate von aufeinanderfolgenden Korrelationen von Detektionsfenstern mit einer gespeicherten Version der Synchronisationssequenz gespeichert werden und dass die Synchronisation aufgrund von den Resultaten mehrerer aufeinanderfolgender Korrelationen durchgeführt wird.

8. Verfahren gemäss Anspruch 1, dadurch gekennzeichnet, dass die Detektionsfenster jeweils um mindestens annähernd ihre Länge $N_{FFT}$ gegeneinander verschoben werden.

9. Verfahren gemäss Anspruch 8, dadurch gekennzeichnet, dass Resultate von aufeinanderfolgenden Korrelationen von Detektionsfenstern mit einer gespeicherten Version der Synchronisationssequenz gespeichert werden und dass die Synchronisation aufgrund von den Resultaten mehrerer aufeinanderfolgender Korrelationen durchgeführt wird.

Fig. 1

Fig. 2

Fig. 3

Fig. 4

Fig. 6

**Fig. 5**

Fig. 7

Europäisches
Patentamt

**EUROPÄISCHER RECHERCHENBERICHT**

Nummer der Anmeldung

EP 99 81 0338

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 98 34368 A (ERICSSON TELEFON AB L M ;TORE ANDRE (SE)) 6. August 1998 (1998-08-06) * Seite 2, Zeile 17 - Zeile 26 * * Seite 5, Zeile 17 - Seite 8, Zeile 2; Abbildungen 2A,3 * | 1-9 | H04L27/26 H04L7/04 |
| X | EP 0 730 357 A (TELIA AB) 4. September 1996 (1996-09-04) * Seite 3, Zeile 8 - Zeile 38 * * Seite 4, Zeile 40 - Seite 6, Zeile 30; Abbildungen 4,5,8 * | 1,8,9 | |
| X | WO 95 03656 A (ENGSTROEM BO ;ISAKSSON MIKAEL (SE); TELIA AB (SE)) 2. Februar 1995 (1995-02-02) | 1 | |
| A | * Seite 1, Zeile 16 - Zeile 32 * * Seite 2, Zeile 4 - Seite 3, Zeile 13 * * Seite 4, Zeile 33 - Seite 5, Zeile 2; Abbildung 2 * * Seite 6, Zeile 13 - Seite 7, Zeile 3; Abbildung 3 * * Seite 7, Zeile 33 - Seite 8, Zeile 9 * | 7-9 | RECHERCHIERTE SACHGEBIETE (Int.Cl.7) H04L H04J |
| E | EP 0 915 597 A (SONY INTERNATIONAL EUROP GMBH) 12. Mai 1999 (1999-05-12) * Seite 2, Absatz 1 - Absatz 3 * * Seite 3, Absatz 16 - Seite 4, Absatz 26 * * Seite 5, Absatz 35 - Absatz 37; Abbildungen 1,2 * | 1-9 | |

-/--

Der vorliegende Recherchenbericht wurde für alle Patentansprüche erstellt

| Recherchenort | Abschlußdatum der Recherche | Prüfer |
|---|---|---|
| DEN HAAG | 22. Dezember 1999 | Roldán Andrade, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

Europäisches
Patentamt

**EUROPÄISCHER RECHERCHENBERICHT**

Nummer der Anmeldung

EP 99 81 0338

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | KELLER T ET AL: "ORTHOGONAL FREQUENCY DIVISION MULTIPLEX SYNCHRONISATION TECHNIQUES FOR WIRELESS LOCAL AREA NETWORKS" IEEE INTERNATIONAL SYMPOSIUM ON PERSONAL, INDOOR AND MOBILE RADIO COMMUNICATIONS, 15. Oktober 1996 (1996-10-15), XP002063294 * Seite 963, rechte Spalte, Absatz 2 – Seite 967, linke Spalte, Absatz 1; Abbildungen 2,4,7 * | 1-9 | |
| A | EP 0 689 313 A (JAPAN BROADCASTING CORP ;NIPPON ELECTRIC CO (JP)) 27. Dezember 1995 (1995-12-27) * Spalte 1, Zeile 27 – Spalte 2, Zeile 20 * * Spalte 7, Zeile 1 – Zeile 12; Abbildung 4 * * Spalte 8, Zeile 17 – Spalte 10, Zeile 32; Abbildungen 6,7 * * Spalte 11, Zeile 7 – Zeile 50; Abbildung 10 * * Spalte 12, Zeile 19 – Spalte 13, Zeile 49; Abbildungen 11,12 * | 1-3,7-9 | RECHERCHIERTE SACHGEBIETE (Int.Cl.7) |
| A | STANTCHEV B ET AL: "Burst synchronization for OFDM-based cellular systems with separate signaling channel" IEEE VEHICULAR TECHNOLOGY CONFERENCE,XX,XX,1998, Seite 758-762 XP002089525 * Seite 759, linke Spalte, Absatz 6 – rechte Spalte, Absatz 2; Abbildung 1 * * Seite 760, linke Spalte, Absatz 2 – Seite 761, rechte Spalte, Absatz 2 * | 2,3,7-9 | |

Der vorliegende Recherchenbericht wurde für alle Patentansprüche erstellt

| Recherchenort | Abschlußdatum der Recherche | Prüfer |
|---|---|---|
| DEN HAAG | 22. Dezember 1999 | Roldán Andrade, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 99 81 0338

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-12-1999

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 9834368 | A | 06-08-1998 | AU | 5889598 | A | 25-08-1998 |
| | | | EP | 0956676 | A | 17-11-1999 |
| | | | SE | 9700308 | A | 01-08-1998 |
| EP 0730357 | A | 04-09-1996 | NO | 960759 | A | 02-09-1996 |
| | | | SE | 9500743 | A | 02-09-1996 |
| | | | US | 5812523 | A | 22-09-1998 |
| WO 9503656 | A | 02-02-1995 | SE | 500986 | C | 17-10-1994 |
| | | | EP | 0712555 | A | 22-05-1996 |
| | | | SE | 9302453 | A | 17-10-1994 |
| | | | US | 5652772 | A | 29-07-1997 |
| EP 0915597 | A | 12-05-1999 | JP | 11215097 | A | 06-08-1999 |
| EP 0689313 | A | 27-12-1995 | JP | 2731722 | B | 25-03-1998 |
| | | | JP | 7321762 | A | 08-12-1995 |
| | | | AU | 684154 | B | 04-12-1997 |
| | | | AU | 2034195 | A | 07-12-1995 |
| | | | US | 5596582 | A | 21-01-1997 |

EPO FORM P0461